(19) Europäisches Patentamt
European Patent Office
Office européen des brevets

(11) **EP 3 745 349 B1**

(12) **EUROPEAN PATENT SPECIFICATION**

(45) Date of publication and mention
of the grant of the patent:
**21.08.2024 Bulletin 2024/34**

(21) Application number: **19743676.9**

(22) Date of filing: **21.01.2019**

(51) International Patent Classification (IPC):
**G06N 3/045** (2023.01)   **G06N 3/08** (2023.01)
**G06T 11/00** (2006.01)

(52) Cooperative Patent Classification (CPC):
**G06T 11/001; G06N 3/045; G06N 3/08;**
G06N 3/048; G06N 20/10

(86) International application number:
**PCT/CN2019/072491**

(87) International publication number:
**WO 2019/144855 (01.08.2019 Gazette 2019/31)**

(54) **IMAGE PROCESSING METHOD, STORAGE MEDIUM, AND COMPUTER DEVICE**

BILDVERARBEITUNGSVERFAHREN, SPEICHERMEDIUM UND COMPUTERVORRICHTUNG

PROCÉDÉ DE TRAITEMENT D'IMAGE, SUPPORT DE STOCKAGE INFORMATIQUE ET
DISPOSITIF INFORMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.01.2018 CN 201810078544**

(43) Date of publication of application:
**02.12.2020 Bulletin 2020/49**

(73) Proprietor: **Tencent Technology (Shenzhen)
Company Limited
Shenzhen, Guangdong, 518057 (CN)**

(72) Inventors:
• **LI, Minjun**
  **Shenzhen, Guangdong 518057 (CN)**
• **HUANG, Haozhi**
  **Shenzhen, Guangdong 518057 (CN)**
• **MA, Lin**
  **Shenzhen, Guangdong 518057 (CN)**
• **LIU, Wei**
  **Shenzhen, Guangdong 518057 (CN)**

• **JIANG, Yugang**
  **Shenzhen, Guangdong 518057 (CN)**

(74) Representative: **Nederlandsch Octrooibureau
P.O. Box 29720
2502 LS The Hague (NL)**

(56) References cited:
**AU-A4- 2017 101 166    CN-A- 106 651 766
CN-A- 107 516 290    CN-A- 108 305 238**

• **LUAN TRAN ET AL: "Representation Learning by
Rotating Your Faces", ARXIV.ORG, CORNELL
UNIVERSITY LIBRARY, 201 OLIN LIBRARY
CORNELL UNIVERSITY ITHACA, NY 14853, 31
May 2017 (2017-05-31), XP080973332, DOI:
10.1109/TPAMI.2018.2868350**
• **HUANG, HAOZHI ET AL.: "Real-Time Neural Style
Transfer for Videos", 2017 IEEE CONFERENCE
ON COMPUTER VISION AND PATTERN
RECOGNITION (CVPR), 21 July 2017
(2017-07-21), pages 7044 - 7052, XP033250071,
ISSN: 1063-6919**

## Description

This application claims priority to Chinese Patent Application No. 2018100785448, filed with the Chinese Patent Office on January 26, 2018 and entitled "IMAGE PROCESSING METHOD AND APPARATUS, STORAGE MEDIUM, AND COMPUTER DEVICE".

## FIELD OF THE TECHNOLOGY

The present disclosure relates to the field of computer technologies, and in particular, to an image processing method, a storage medium, and a computer device.

## BACKGROUND OF THE DISCLOSURE

With the development of computer technologies and the progress of image processing technologies, more and more image processing methods are developed. Currently, a commonly used image processing technology is, for example, image feature conversion processing, such as image color feature conversion, image light and shadow feature conversion, or image style feature conversion.

However, in a conventional image processing, image feature conversion is mainly implemented by means of texture synthesis, i.e., spreading image texture of a target feature to an image area of a to-be-processed image. The process may easily cause mismatch, resulting in distortion of an obtained image. The article LUAN TRAN ET AL: "Representation Learning by Rotating Your Faces", ARXIV.ORG, CORNELL UNIVERSITY LIBRARY, 201 OLIN LIBRARY CORNELL UNIVERSITY ITHACA, NY 14853, 31 May 2017 represents background art that is useful to understand the invention.

## SUMMARY

According to embodiments provided in the present disclosure, an image processing method, a storage medium and a computer device are provided.

An image processing method according to claim 1 is provided, which is performed by a computer device

A non-volatile storage medium storing a computer-readable instruction according to claim 4 is provided

A computer device according to claim 3 is provided. The computer device includes a memory and a processor. The memory stores a computer-readable instruction.

Details of one or more embodiments of the present disclosure are provided in the following accompanying drawings and descriptions. Other features, objectives, and advantages of the present disclosure become clear with reference to the specification, the accompanying drawings, and the claims.

BRIEF DESCRIPTION OF THE DRAWINGS

To describe the technical solution in this embodiment of the present disclosure more clearly, a brief introduction is made below to accompanying drawings required in descriptions of this embodiment. Obviously, the accompanying drawings described below are merely some embodiments of the present disclosure, and for a person skilled in the art, other accompanying drawings may be further obtained according to the accompanying drawings without paying creative efforts.

FIG. 1 is a schematic flowchart of an image processing method according to an embodiment.
FIG. 2 is a schematic model diagram of a first stage image conversion model according to an embodiment.
FIG. 3 is a schematic logical diagram of an image processing procedure according to an embodiment.
FIG. 4 is a schematic logical diagram of training a first stage image conversion model according to an embodiment.
FIG. 5 is a schematic logical diagram of training a second stage image conversion model according to an embodiment.
FIG. 6 is a schematic diagram of images before and after image conversion according to an embodiment.
FIG. 7 is a structural diagram of modules of an image processing apparatus according to an embodiment.
FIG. 8 is a structural diagram of modules of an image processing apparatus according to another embodiment.
FIG. 9 is a diagram of an internal structure of a computer device according to an embodiment.
FIG. 10 is a diagram of an internal structure of a computer device according to another embodiment.

## DESCRIPTION OF EMBODIMENTS

To make the objectives, technical solutions, and advantages of the present disclosure clearer and more understandable, a detailed description is made below with reference to accompanying drawings and embodiments. It is to be understood that the specific embodiments described herein are merely used for explanation rather than limitation.

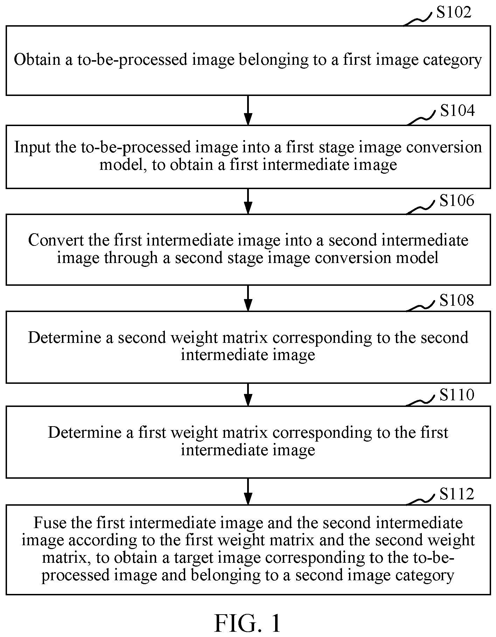

FIG. 1 is a schematic flowchart of an image processing method according to an embodiment. In this embodiment, an example of applying the method to a computer device is used for description. Referring to FIG. 1, the image processing method specifically includes the following steps S102 to S 112.

In step S 102, a to-be-processed image belonging to a first image category is obtained.

An image category is a category to which an image feature of an image belongs. The image feature may be specifically a color feature, a style feature, a content feature, or the like. Accordingly, an image category classified according to the color feature is, for example, a black and white image category or a color image category, an image category classified according to the style feature is, for example, a sketch image category or an oil painting image category, and an image category classified according to the content feature is, for example, an apple image category or an orange image category.

Specifically, the to-be-processed image is an image on which image category conversion is to be performed. The computer device may be a user terminal. The user terminal may directly obtain a to-be-processed image of an image category that is uploaded by a user, or may receive a to-be-processed image of an image category that is transmitted by another user terminal. The computer device may alternatively be a server. The server may receive a to-be-processed image of an image category that is uploaded by a user terminal.

In step S104, the to-be-processed image is inputted into a first stage image conversion model, to obtain a first intermediate image.

The image conversion refers to converting an image of an image category into an image of another image category. The image conversion model is a machine learning model having an image conversion capability after being trained. Machine learning is briefly referred to as ML. The machine learning model may be implemented as a neural network model, a support vector machine (SVM), a logistic regression model, or the like.

The first stage image conversion model is used for preliminarily converting an image of the first image category into an image of a second image category. An error is allowed between an image obtained by conversion through the first stage image conversion model and a desired converted image of the second image category. It may be understood that, a capability of image detail feature conversion of the first stage image conversion model is not requied herein, as long as the conversion is performed on the overall features of the image.

Specifically, the computer device may obtain the first stage image conversion model through training in advance using a first sample belonging to the first image category and a second sample belonging to the second image category. In this embodiment, the first stage image conversion model may be specifically implemented as a convolutional neural network model. A structure of the convolutional neural network model may be specifically an encoder-decoder structure. The encoder may be formed by multiple convolution layers, and the decoder may be formed by multiple deconvolution layers. The encoder part converts the input image into a feature map with a low resolution and a larger quantity of channels, where the feature map may be regarded as an encoding result of the original image. The decoder part decodes the feature map into the image of the second image category.

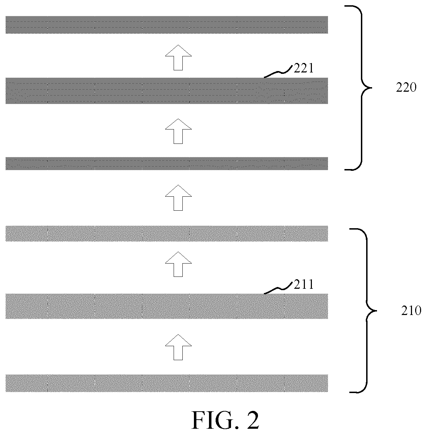

For example, FIG. 2 is a schematic diagram of a first stage image conversion model according to an embodiment. Referring to FIG. 2, the first stage image conversion model has an encoder-decoder structure. An encoder structure 210 includes three convolution layers 211, and a decoder structure 220 includes three deconvolution layers 221.

In an embodiment, in training the first stage image conversion model, when the first samples belonging to the first image category are in a one-to-one correspondence with the second samples belonging to the second image category, the second sample corresponding to the first sample is used as a training label of the first sample, so that the first stage image conversion model is trained supervisedly using the first sample and the corresponding training label.

In an embodiment, in training the first stage image conversion model, when there is neither the second sample corresponding to the first sample nor the first sample corresponding to the second sample, a first stage image conversion model converting an image of the first image category into an image of the second image category, and a first stage image reverse conversion model converting an image of the second image category into an image of the first image category are constructed. The first sample is processed sequentially by the first stage image conversion model and the first stage image reverse conversion model to form a closed loop, and the second sample is processed sequentially by the first stage image reverse conversion model and the first stage image conversion model to form a closed loop, so that the first stage image conversion model is trained unsupervisedly by using a cycle consistency constraint.

It may be understood that, that the first sample corresponds to the second sample refers to that aside from an image feature used for distinguishing their categories, other image features of the first sample and the second sample are the same. For example, in a case that the first image category is the black and white image category, and the second image category is the color image category, for apple images of the first sample and the second sample, only colors of an apple are different, but sizes, shapes or locations of the apple are all the same.

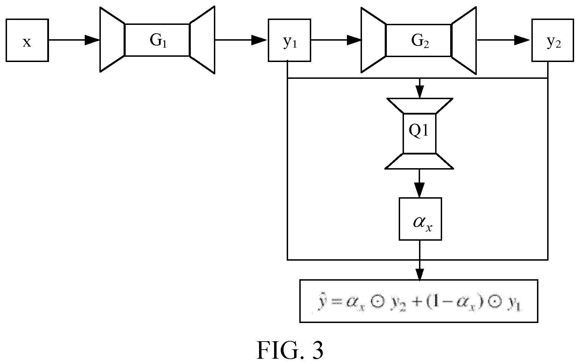

FIG. 3 is a schematic logical diagram of an image processing procedure according to an embodiment. Referring to FIG. 3, the computer device may input a to-be-processed image x belonging to a first image category A into a first stage image conversion model G1, to obtain a first intermediate image y1 outputted by the first stage image conversion model G1.

In this embodiment, the image conversion may be non-content conversion, such as image style conversion, image color conversion or image depth of field conversion. The image conversion may alternatively be content conversion, for example, an object in an image is modified. Specifically, an apple image of an apple image category is modified into an orange image of an orange image category.

In step S106, the first intermediate image is converted into a second intermediate image through a second stage image conversion model.

The second stage image conversion model is used for further converting the image outputted by the first stage image conversion model into the image of the second image category. It may be understood that, the second stage image conversion model is required to perform the conversion on image detail features.

Specifically, the computer device may obtain the second stage image conversion model through training in advance using the first intermediate image outputted by the first stage image conversion model and the second sample belonging to the second image category. In this embodiment, the second stage image conversion model may be specifically implemented as a convolutional neural network model. A structure of the convolutional neural network model may be specifically an encoder-decoder structure. The encoder may be formed by multiple convolution layers, and the decoder may be formed by multiple deconvolution layers.

In an embodiment, in training the second stage image conversion model, when the first samples belonging to the first image category are in a one-to-one correspondence with the second samples belonging to the second image category, the second sample corresponding to the first sample is used as a training label of the first intermediate image corresponding to the first sample, so that the second stage image conversion model is trained supervisedly using the first intermediate image and the corresponding training label.

In an embodiment, in training the first stage image conversion model, when there is neither the second sample corresponding to the first sample nor the first sample corresponding to the second sample, a second stage image conversion model converting the first intermediate image into an image of the second image category, and a second stage image reverse conversion model converting an image of the second image category into the first intermediate image are constructed. The first sample is processed sequentially by the first stage image conversion model, the second stage image conversion model, the first stage image reverse conversion model and the second stage image reverse conversion model to form a closed loop, and the second sample is processed sequentially by the first stage image reverse conversion model, the second stage image reverse conversion model, the first stage image conversion model and the second stage image conversion model to form a closed loop, so that the second stage image conversion model is trained unsupervisedly by using a cycle consistency constraint.

Referring to FIG. 3, after obtaining the first intermediate image y1 outputted by the first stage image conversion model G1, the computer device may continue to input the first intermediate image y1 into a second stage image conversion model G2, to obtain a second intermediate image y2 outputted by the second stage image conversion model G2.

In step S 108, a second weight matrix corresponding to the second intermediate image is determined.

A weight is defined with respect to an object. The weight of the object reflects a relative importance level of the object in overall evaluation. Because the computer device, when processing an image, usually processes digital image data in a matrix form, a weight of the image is also in a matrix form.

In an embodiment, the computer device may preset a weight mapping function, so that a weight matrix corresponding to the second intermediate image is obtained by mapping through the weight mapping function. Specifically, the computer device may preset various weight mapping functions. The computer device may use the to-be-processed image and the second intermediate image as independent variables of the weight mapping function, to obtain a weight matrix corresponding to the intermediate image that is used as an independent variable.

In step S 110, a first weight matrix corresponding to the first intermediate image is determined.

Specifically, the computer device may use the to-be-processed image and the first intermediate image as independent variables of a weight mapping function, to obtain a weight matrix corresponding to the intermediate image that is used as an independent variable.

In an embodiment, the computer device may also use the to-be-processed image, the first intermediate image, and the second intermediate image as independent variables of a weight mapping function, to obtain a weight matrix corresponding to one of the intermediate images, and further obtain, according to the weight matrix, a weight matrix corresponding to the other intermediate image. The computer device may use the first intermediate image and the second intermediate image as independent variables of a weight mapping function, to obtain a weight matrix corresponding to one of the intermediate images, and further obtain, according to the weight matrix, a weight matrix corresponding to the other intermediate image. The one of the intermediate images may be the first intermediate image, or may be the second intermediate image. It may be understood that, a sequence of performing S 108 and S 110 is not limited herein. S 108 may be performed before S 110, or may be performed after S 110, or may be performed at the same time as S 110. The sequence of performing S108 and S 110 depends on the weight mapping function preset by the computer device.

In an embodiment, S 108 includes: inputting the to-be-processed image, the first intermediate image and the second intermediate image into a first weight prediction model, to obtain the second weight matrix corresponding to the second intermediate image. S 110 includes: obtaining the first weight matrix corresponding to the first intermediate image according to the second weight matrix, where a sum of the first weight matrix and the second weight matrix is a preset matrix.

The weight prediction model is a machine learning model having a weight prediction capability after being trained. In this embodiment, the weight prediction model may be specifically implemented as a shallow convolutional neural network model. For example, the shallow convolutional neural network model may be formed by three convolution layers. Structures of the first two convolution layers are both a Convolution-InstanceNorm-ReLU structure, and a structure of the last convolution layer is a Convolution-Sigmoid structure.

The first weight prediction model is a machine learning model performing weight prediction for converting the image of the first image category into the image of the second image category. A second weight prediction model mentioned in the following is a machine learning model performing weight prediction for converting the image of the second image category into the image of the first image category.

The input of the first weight prediction model is the to-be-processed image, the first intermediate image, and the second intermediate image, where image sizes of the three images are the same. The first weight prediction model outputs a weight matrix having the same size as the inputted image, where each element of the weight matrix represents a weight of a pixel value of the second intermediate image in a corresponding pixel location. The first weight matrix and the second weight matrix are matrices of the same size and the same quantity of dimensions. In addition, a sum of the first weight matrix and the second weight matrix is a preset matrix. The preset matrix may be specifically an all-one matrix having the same size and quantity of dimensions the second weight matrix. Each matrix element of the all-one matrix has a value of one.

Specifically, the computer device may input the to-be-processed image, the first intermediate image and the second intermediate image into the first weight prediction model, to obtain the second weight matrix that corresponds to the second intermediate image and that is outputted by the first weight prediction model. The sum of the first weight matrix corresponding to the first intermediate image and the second weight matrix corresponding to the second intermediate image is the preset matrix. The computer device may obtain the first weight matrix corresponding to the first intermediate image by subtracting the second weight matrix corresponding to the second intermediate image from the preset matrix.

Referring to FIG. 3, the computer device inputs the first intermediate image y1 outputted by the first stage image conversion model G1 and the second intermediate image y2 outputted by the second stage image conversion model G2 into a first weight prediction model Gf, to obtain a weight matrix that corresponds to the second intermediate image y2 and that is outputted by the first weight prediction model Gf, and then obtain a weight matrix corresponding to the first intermediate image y1.

In this embodiment, with the strong learning and representation capability of the machine learning model, the machine learning model is trained to learn how to predict a weight. Therefore, the weight predicted by the machine learning model is better than that obtained by the conventional method.

In step S112, the first intermediate image and the second intermediate image are fused according to the first weight matrix and the second weight matrix, to obtain a target image corresponding to the to-be-processed image and belonging to a second image category.

Specifically, the computer device may perform weighted summation on the first intermediate image and the second intermediate image according to the corresponding weight matrices, to obtain the target image corresponding to the to-be-processed image and belonging to the second image category.

In an embodiment, the first intermediate image and the second intermediate image are fused according to the corresponding weight matrices through an adaptive fusion layer, to obtain the target image corresponding to the to-be-processed image and belonging to the second image category.

In an embodiment, S112 includes: multiplying pixel values of the first intermediate image respectively by matrix elements of the first weight matrix in corresponding matrix positions, to obtain a first target image belonging to the second image category; multiplying pixel values of the second intermediate image respectively by matrix elements of the second weight matrix in corresponding matrix positions, to obtain a second target image belonging to the second image category; and obtaining, according to the first target image and the second target image, the target image corresponding to the to-be-processed image and belonging to the second image category.

A size of a pixel matrix formed by pixels of each intermediate image is the same as the size of the weight matrix corresponding to the intermediate image. In this case, pixel elements in the pixel matrix are in one-to-one correspondence with weight elements in the weight matrix, that is, each weight element in the weight matrix represents a weight of a pixel value of a corresponding pixel element in the corresponding intermediate image.

Specifically, the computer device multiplies the pixel values of the first intermediate image respectively by the matrix elements of the first weight matrix in corresponding matrix positions, to obtain the first target image belonging to the second image category; multiplies the pixel values of the second intermediate image respectively by the matrix elements of the second weight matrix in corresponding matrix positions, to obtain the second target image belonging to the second image category; and adds the pixel values of the first intermediate image respectively to the pixel values of the second intermediate image in corresponding matrix positions, to obtain the target image corresponding to the to-be-processed image and belonging to the second image category.

Referring to FIG. 3, the computer device may calculate a fused target image using the first intermediate image y1, the first weight matrix, the second intermediate image y2 and the second weight matrix.

In this embodiment, outputs of multiple stage models are fused in the finally obtained target image, so that a problem of image distortion can be greatly overcome, thereby improving the image conversion performance.

In the foregoing image processing method, when a to-be-processed image belonging to a first image category is to be converted into an image of a second image category, the to-be-processed image is automatically processed sequentially by the first stage image conversion model and the second stage image conversion model, and after weight matrices respectively corresponding to outputs of the two stages of models are determined, the outputs of the two models are adaptively fused according to the corresponding weight matrices, to obtain the target image. In this way, the to-be-processed image is subjected to multiple stages of model processing, and the outputs of the multiple stages of models are fused in the finally obtained target image, so that a problem of image distortion can be greatly overcome, thereby improving the performance of converting the to-be-processed image into the target image.

In an embodiment, S 104 includes: performing downsampling on the to-be-processed image, to obtain a compressed image with a reduced image size; and inputting the compressed image into the first stage image conversion model, to output the first intermediate image with an image size that is the same as the image size of the compressed image. S106 includes: performing upsampling on the first intermediate image, to obtain an enlarged image with an image size that is the same as an image size of the to-be-processed image; and inputting the enlarged image into the second stage image conversion model, to output the second intermediate image with an image size that is the same as the image size of the enlarged image.

Downsampling is also referred to as down-sampling, which is a type of processing for image compression. An image size of an image subjected to a downsampling operation is decreased. The decreasing degree is related to a sampling cycle of the downsampling operation. Upsampling is also referred to as image interpolation, which is a type of processing for enlarging an image. An image size of an image subjected to an upsampling operation is increased. The increasing degree is related to a sampling cycle of the upsampling operation.

Specifically, the computer device may perform a downsampling operation on the to-be-processed image. The downsampling may specifically be performed in a manner of mean sampling or extreme sampling. For example, the downsampling is to perform mean sampling on a 2*2 pixel area. If a pixel value matrix in a 2*2 pixel area is [1, 2, 3, 4], a pixel value obtained through downsampling is: (1+2+3+4)/4=2.5. A resolution of an image obtained by the downsampling operation is reduced to 1/4 of a resolution of the to-be-processed image.

The computer device then inputs the compressed image with the reduced image size after downsampling into the first stage image conversion model, to obtain the first intermediate image, which is outputted by the first stage image conversion model, with an image size that is the same as the image size of the compressed image. Because in this case, the image size of the first intermediate image is less than a size of the to-be-processed image, the computer device needs to perform an upsampling operation corresponding to the downsampling operation on the first intermediate image before inputting the first intermediate image into the second stage image conversion model, so that a resolution of a feature map obtained after the upsampling operation is increased to four times of the resolution of the feature map before the upsampling operation, to ensure that a resolution of the second intermediate image outputted by the second stage image conversion model is the same as the resolution of the to-be-processed image.

In this embodiment, in the first stage of the conversion of the image, the image is converted after being compressed, so that a data volume of the image processed by the model is small. In this way, in the case of low requirement of image conversion precision, not only the image conversion performance can be ensured, but also the image conversion time can be shortened.

In an embodiment, the image processing method further includes model training steps. Steps of training the first stage image conversion model specifically include: obtaining a first sample belonging to the first image category and a second sample belonging to the second image category; processing the first sample sequentially by the first stage image conversion model and a first stage image reverse conversion model, to obtain a first sample single stage recovery image; processing the second sample sequentially by the first stage image reverse conversion model and the first stage image conversion model, to obtain a second sample single stage recovery image; and adjusting the first stage image conversion model and the first stage image reverse conversion model according to a difference between the first sample and the first sample single stage recovery image, and a difference between the second sample and the second sample single stage recovery image, until a training stop condition is satisfied.

The first sample is an image belonging to the first image category, and is used for training the first stage image conversion model and the first stage image reverse conversion model. The second sample is an image belonging to the second image category, and is also used for training the first stage image conversion model and the first stage image reverse conversion model. The first stage image conversion model is a machine learning model converting an image of the first image category into an image of the second image category, and the first stage image reverse conversion model is a machine learning model converting an image of the second image category into an image of the first image category.

The first sample single stage recovery image is an image belonging to the first image category, i.e., an image of the first image category that is obtained after the first sample is converted into the image of the second image category through the first stage image conversion model and then recovered through the first stage image reverse conversion model. The second sample single stage recovery image is an image belonging to the second image category, i.e., an image of the second image category that is obtained after the second sample is converted into the image of the first image category through the first stage image reverse conversion model and then recovered through the first stage image conversion model.

It may be understood that, an application scenario of this embodiment is a scenario in which there is neither the second sample corresponding to the first sample nor the first sample corresponding to the second sample, that is, a model training scenario in which there is actually neither an image that belongs to the second image category and that can be used as the training label of the first sample, nor an image that belongs to the first image category and that can be used as the training label of the second sample. Therefore, in this embodiment, by using cycle consistency, the first sample is used as an optimization target of a result of performing image conversion and image reverse conversion on the first sample, and the second sample is used as an optimization target of a result of performing image reverse conversion and image conversion on the second sample.

Specifically, the computer device may obtain the first sample belonging to the first image category, and process the first sample sequentially by the first stage image conversion model and the first stage image reverse conversion model, to obtain the first sample single stage recovery image. In this case, according to a cycle consistency constraint, it is desired to recover the first sample single stage recovery image as the first sample. It may be understood that, the objective of training the first stage image conversion model and the first stage image reverse conversion model is to minimize a difference between the first sample and the first sample single stage recovery image.

Further, in case that multiple first samples are converted into the same image by the first stage image conversion model, the computer device may obtain the second sample belonging to the second image category, and process the second sample sequentially by the first stage image reverse conversion model and the first stage image conversion model, to obtain the second sample single stage recovery image. In this case, it is desired to recover the second sample single stage recovery image as the second sample. It may be understood that, the objective of training the first stage image conversion model and the first stage image reverse conversion model is to minimize the difference between the first sample and the first sample single stage recovery image and a difference between the second sample and the second sample single stage recovery image.

The difference between the first sample and the first sample single stage recovery image and the difference between the second sample and the second sample single stage recovery image may be specifically a 1-norm, a 2-norm, or the like of differences between image pixels.

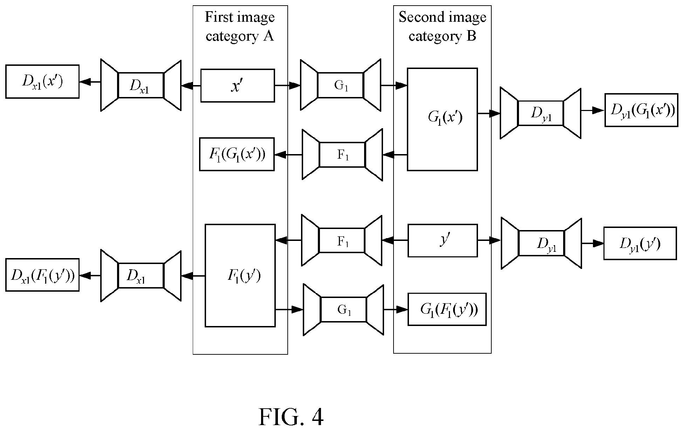

For example, FIG. 4 is a schematic logical diagram of training a first stage image conversion model according to an embodiment. Referring to FIG. 4, the computer device may obtain a first sample $x'$ of the first image category A, and sequentially input $x'$ into the first stage image conversion model G1 and a first stage image reverse conversion model F 1, to obtain a first sample single stage recovery image $F_1(G_1(x'))$. In this case, it is desired to obtain $F_1(G_1(x'))$ as $x'$. It may be understood that, an objective of training the model is to minimize a difference between $F_1(G_1(x'))$ and $x'$. The computer device may further obtain a second sample $y'$ belonging to a second image category B, and sequentially input $y'$ into the first stage image reverse conversion model F 1 and the first stage image conversion model G1, to obtain a second sample single stage recovery image $G_1(F_1(y'))$. In this case, it is desired to obtain $G_1(F_1(y'))$ as $y'$. It may be understood that, an objective of training the model is to minimize a difference between $G_1(F_1(y'))$ and $y'$.

In this case, in training the model of the first stage, the cycle consistency constraint is expressed as:

$$L_{cyc1} = \left\| F_1(G_1(x')) - x' \right\|_1 + \left\| G_1(F_1(y')) - y' \right\|_1 \tag{1}$$

where $L_{cyc1}$ is a loss function based on cycle consistency. The model training procedure may include a procedure of adjusting model parameters of the first stage image conversion model and the first stage image reverse conversion model to minimize $L_{cyc1}$.

In this embodiment, the machine learning model is trained unsupervisedly by using the cycle consistency constraint, so that a machine learning model converting any two image categories of images into each other is obtained through training. Therefore, the training of the machine learning model does not depend on a sample label as in the conventional supervised training, thereby expanding image processing application scenarios.

In an embodiment, the training stop condition may be that a quantity of times of training of the model reaches a preset quantity of times of training. When training the model, the computer device may count the quantity of times of training. When the preset quantity of times of training is reached, the computer device may determine that the model satisfies the training stop condition and end the training of the model.

In an embodiment, the training stop condition may be that a discrimination performance indicator value of an adjusted discrimination model reaches a preset indicator value, or an image conversion performance indicator value of an adjusted image conversion model reaches a preset indicator value.

In an embodiment, the image processing method further includes steps of optimizing the first stage image conversion model. The steps of optimizing the first stage image conversion model specifically include: obtaining a first sample single stage conversion image outputted by the first stage image conversion model after the first sample is processed by the first stage image conversion model; obtaining a second sample single stage conversion image outputted by the first stage image reverse conversion model after the second sample is processed by the first stage image reverse conversion model; inputting the first sample into a first stage image reverse conversion discrimination model to obtain a discrimination confidence of the first sample, and inputting the second sample single stage conversion image into the first stage image reverse conversion discrimination model to obtain a discrimination confidence of the second sample single stage conversion image; and inputting the second sample into a first stage image conversion discrimination model to obtain a discrimination confidence of the second sample, and inputting the first sample single stage conversion image into the first stage image conversion discrimination model to obtain a discrimination confidence of the first sample single stage conversion image. The adjusting the first stage image conversion model and the first stage image reverse conversion model according to a difference between the first sample and the first sample single stage recovery image, and a difference between the second sample and the second sample single stage recovery image, until a training stop condition is satisfied includes: adjusting, until the training stop condition is satisfied, the first stage image conversion discrimination model, the first stage image reverse conversion discrimination model, the first stage image conversion model and the first stage image reverse conversion model by means of maximizing the discrimination confidence of the first sample and the discrimination confidence of the second sample, and minimizing the discrimination confidence of the second sample single stage conversion image, the discrimination confidence of the first sample single stage conversion image, the difference between the first sample and the first sample single stage recovery image, and the difference between the second sample and the second sample single stage recovery image.

The discrimination model is a machine learning model having a discrimination capability after being trained. In this embodiment, the first stage image conversion discrimination model is used for discriminating whether the input image is an image originally belonging to the second image category, and outputting a discrimination confidence as a discrimination result, that is, a first stage image conversion discrimination confidence. The first stage image reverse conversion discrimination model is used for discriminating whether the input image is an image originally belonging to the first image category, and outputting a discrimination confidence as a discrimination result, that is, a first stage image reverse conversion discrimination confidence.

The first stage image conversion discrimination confidence is in a one-to-one correspondence with the input image, and represents a credibility degree at which the input image is an image originally belonging to the second image category. A higher discrimination confidence represents a higher probability that the input image is an image originally belonging to the second image category. The first stage image reverse conversion discrimination confidence is in a one-to-one correspondence with the input image, and represents a credibility degree at which the input image is an image originally belonging to the first image category. A higher discrimination confidence represents a higher probability that the input image is an image originally belonging to the first image category.

It may be understood that, a method of adversarial learning is adopted in this embodiment. The first stage image conversion model is to learn how to convert an input image of the first image category into an image of the second image category, in order that the generated image can cheat the first stage image conversion discrimination model, so that the first stage image conversion discrimination model determines the input image as an image originally belonging to the second image category. The first stage image reverse conversion model is to learn how to convert an input image of the second image category into an image of the first image category, in order that the generated image can cheat the first stage image reverse conversion discrimination model, so that the first stage image reverse conversion discrimination model determines the input image as an image originally belonging to the second image category.

Referring to FIG. 4, the computer device may respectively input $x'$ and $F_1(y')$ into a first stage image reverse conversion discrimination model $D_{x1}$, to obtain a discrimination confidence $D_{x1}(x')$ of $x'$ and a discrimination confidence $D_{x1}(F_1(y'))$ of $F_1(y')$; and respectively input $y'$ and $G_1(x')$ into a first stage image conversion discrimination model $D_{y1}$, to obtain a discrimination confidence $D_{y1}(y')$ of $y'$ and a discrimination confidence $D_{y1}(G_1(x'))$ of $G_1(x')$.

In this case, in training the model of the first stage, an adversarial learning constraint is expressed as:

$$L_{adv1} = \log(D_{y1}(y')) + \log(1 - D_{y1}(G_1(x'))) + \log(D_{x1}(x')) + \log(1 - D_{x1}(F_1(y')))$$

(2)

where $L_{adv1}$ is a loss function based on the adversarial learning constraint. The model training procedure may include a procedure of adjusting model parameters of the first stage image conversion discrimination model and the first stage image reverse conversion discrimination model to maximize $L_{adv1}$. The procedure of maximizing $L_{adv1}$ is equivalent to the procedure of maximizing $D_{x1}(x')$ and $D_{y1}(y')$ and minimizing $D_{x1}(F_1(y'))$ and $D_{y1}(G_1(x'))$.

In a training procedure, optimizing the image conversion model and the discrimination model in an adversarial manner is expressed as:

$$G_1, F_1 = \arg\min_{G_1, F_1}(\max_{D_{x1}, D_{y1}}(L_{adv1} + \lambda_1 L_{cyc1}))$$ 

(3)

where $\lambda_1$ is a cycle consistency constraint weight. Procedures of maximizing $L_{adv1}$ and minimizing $L_{cyc1}$ may be performed alternately. That is, in training with a sample, $L_{adv1}$ is maximized before $L_{cyc1}$ is minimized, and in training with a next sample, $L_{cyc1}$ is minimized before $L_{adv1}$ is maximized.

In this embodiment, two models are trained, i.e., the image conversion model and training of the discrimination model. The purpose of training the image conversion model is to learn how to convert an image of a category into an image of another category, and the purpose of training the discrimination model is to learn to determine whether an input image is an original image or an image generated through the image conversion model. In this way, the image conversion model learns to generate an image that is very similar with the original image, to interfere the determination of the discrimination model, and the discrimination model learns to precisely determine whether an image is an original image or a generated image. The two models fight against each other and promote each other, so that the performance of the trained model is improved. As a result, by using the trained image conversion model to convert an image, a problem of image distortion can be greatly overcome, thereby improving the image conversion performance.

In an embodiment, a person skilled in the art may understand that, in supervised training of the first stage image conversion model and the first stage image reverse conversion model, the adversarial training may also be performed with the first stage image conversion discrimination model and the first stage image reverse conversion discrimination model.

In an embodiment, steps of training the second stage image conversion model specifically include: processing the first sample sequentially by the first stage image conversion model and the second stage image conversion model, to obtain a first sample first stage conversion image outputted by the first stage image conversion model, and a first sample second stage conversion image outputted by the second stage image conversion model; obtaining, according to the first sample first stage conversion image and the first sample second stage conversion image, a first sample conversion image corresponding to the first sample and belonging to the second image category; processing the first sample conversion image sequentially by the first stage image reverse conversion model and a second stage image reverse conversion model, to obtain a first sample first stage recovery image outputted by the first stage image reverse conversion model, and a first sample second stage recovery image outputted by the second stage image reverse conversion model; obtaining, according to the first sample first stage recovery image and the first sample second stage recovery image, a first sample recovery image corresponding to the first sample and belonging to the first image category; processing the second sample sequentially by the first stage image reverse conversion model and the second stage image reverse conversion model, to obtain a second sample first stage conversion image outputted by the first stage image reverse conversion model, and a second sample second stage conversion image outputted by the second stage image reverse conversion model; obtaining, according to the second sample first stage conversion image and the second sample second stage conversion image, a second sample conversion image corresponding to the second sample and belonging to the first image category; processing the second sample conversion image sequentially by the first stage image conversion model and the second stage image conversion model, to obtain a second sample first stage recovery image outputted by the first stage image conversion model, and a second sample second stage recovery image outputted by the second stage image conversion model; obtaining, according to the second sample first stage recovery image and the second sample second stage recovery image, a second sample recovery image corresponding to the second sample and belonging to the second image category; and adjusting the second stage image conversion model and the second stage image reverse conversion model according to a difference between the first sample and the first sample recovery image, and a difference between the second sample and the second sample recovery image, until a training stop condition is satisfied.

It may be understood that, when training the second stage image conversion model, the first stage image conversion model has been trained, and can be directly used.

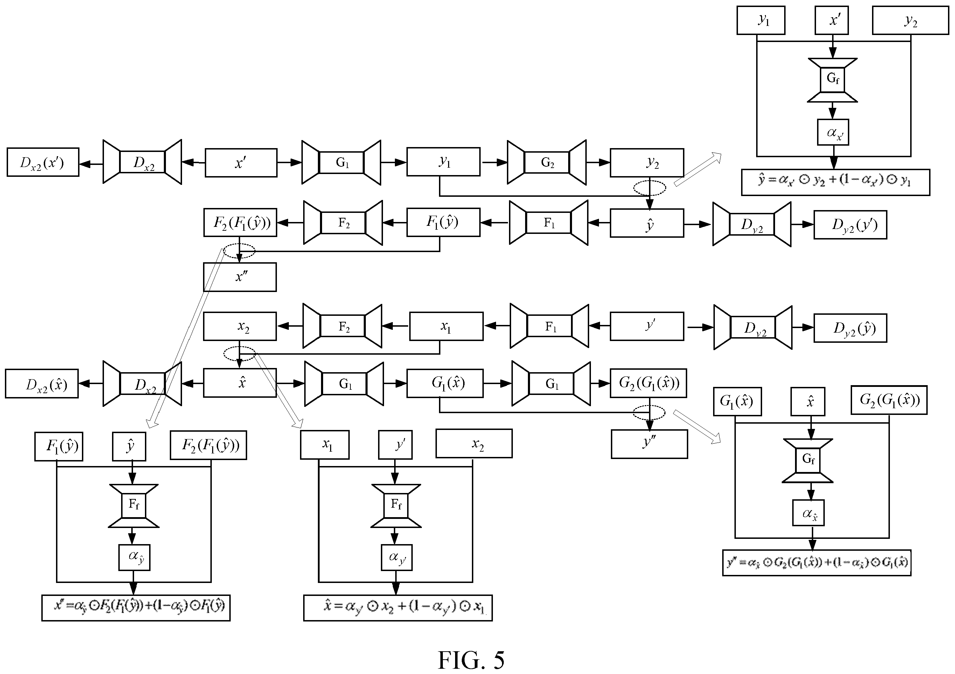

For example, FIG. 5 is a schematic logical diagram of training a second stage image conversion model according to an embodiment. Referring to FIG. 5, the computer device may obtain the first sample $x'$ belonging to the first image category A, sequentially input $x'$ into the first stage image conversion model G1, to obtain a first sample first stage conversion image $y_1 = G_1(x')$, then input y1 into the second stage image conversion model G2, to obtain a first sample second stage conversion image $y_2 = G_2(y_1)$, and then obtain, according to y1 and y2, a first sample conversion image $\hat{y} = G_f(x',y_1,y_2)$ corresponding to the first sample and belonging to the second image category. The computer device further inputs $\hat{y}$ into the first stage image reverse conversion model F1, to obtain a first sample first stage recovery image $F_1(\hat{y})$, then inputs $F_1(\hat{y})$ into a second stage image reverse conversion model F2, to obtain a first sample second stage recovery image $F_2(F_1(\hat{y}))$, and then obtains, according to $F_1(\hat{y})$ and $F_2(F_1(\hat{y}))$, a first sample recovery image $x'' = F_f(\hat{y}, F_1(\hat{y}),F_2(F_1(\hat{y})))$ corresponding to the first sample and belonging to the first image category. In this case, it is desired to obtain $x''$ as $x'$. Therefore, it may be understood that, an objective of training the model is to minimize a difference between $x''$ and $x'$.

The computer device may further obtain the second sample $y'$ belonging to the second image category B, sequentially input $y'$ into the first stage image reverse conversion model F1, to obtain a second sample first stage conversion image $x_1 = F_1(y')$, then input x1 into the second stage image reverse conversion model F2, to obtain a second sample second stage conversion image $x_2 = F_2(x_1)$, and then obtain, according to x1 and x2, a second sample conversion image $\hat{x} = F_f(y',x_1,x_2)$ corresponding to the second sample and belonging to the first image category. The computer device further inputs $\hat{x}$ into the first stage image conversion model G1, to obtain a second sample first stage recovery image $G_1(\hat{x})$, then inputs $G_1(\hat{x})$ into the second stage image conversion model G2, to obtain a second sample second stage recovery image $G_2(G_1(\hat{x}))$, and then obtains, according to $G_1(\hat{x})$ and $G_2(G_1(\hat{x}))$, a second sample recovery image $y'' = G_f(\hat{x},G_1(\hat{x}),G_2(G_1(\hat{x})))$ corresponding to the second sample and belonging to the second image category. In this case, it is desired to obtain $y''$ as $y'$. Therefore, it may be understood that, an objective of training the model is to minimize a difference between $y''$ and $y'$.

In this case, in training the model of the second stage, the cycle consistency constraint is expressed as:

$$L_{cyc2} = \left\| F_f(\hat{y}, F_1(\hat{y}), F_2(F_1(\hat{y}))) - x' \right\|_1 + \left\| G_f(\hat{x}, G_1(\hat{x}), G_2(G_1(\hat{x}))) - y' \right\|_1 \quad (4)$$

where $L_{cyc2}$ is a loss function based on cycle consistency. The model training procedure may include a procedure of adjusting model parameters of the second stage image conversion model and the second stage image reverse conversion model to minimize $L_{cyc2}$.

In this embodiment, the machine learning model is trained unsupervisedly by using the cycle consistency constraint, so that a machine learning model converting any two image categories of images into each other is obtained through training. Therefore, the training of the machine learning model does not depend on a sample label as in the conventional supervised training, thereby expanding image processing application scenarios.

In an embodiment, the image processing method further includes steps of optimizing the second stage image conversion model. The steps of optimizing the second stage image conversion model specifically include: inputting the first sample into a second stage image reverse conversion discrimination model to obtain a discrimination confidence of the first sample, and inputting the second sample conversion image into the second stage image reverse conversion discrimination model to obtain a discrimination confidence of the second sample conversion image; and inputting the second sample into a second stage image conversion discrimination model to obtain a discrimination confidence of the second sample, and inputting the first sample conversion image into the second stage image conversion discrimination model to obtain a discrimination confidence of the first sample conversion image. The adjusting the second stage image conversion model and the second stage image reverse conversion model according to a difference between the first sample and the first sample recovery image, and a difference between the second sample and the second sample recovery image, until a training stop condition is satisfied includes: adjusting, until the training stop condition is satisfied, the second stage image conversion discrimination model, the second stage image reverse conversion discrimination model, the second stage image conversion model and the second stage image reverse conversion model by means of maximizing the discrimination confidence of the first sample and the discrimination confidence of the second sample, and minimizing the discrimination confidence of the second sample conversion image, the discrimination confidence of the first sample conversion image, the difference between the first sample and the first sample recovery image, and the difference between the second sample and the second sample recovery image.

Referring to FIG. 5, the computer device may respectively input $x'$ and $\hat{x}$ into a second stage image reverse conversion discrimination model $D_{x2}$, to obtain a discrimination confidence $D_{x2}(x')$ of $x'$ and a discrimination confidence

$D_{x2}(\hat{x})$ of $\hat{x}$; and respectively input $y'$ and $\hat{y}$ into a second stage image conversion discrimination model $D_{y2}$, to obtain a discrimination confidence $D_{y2}(y')$ of $y'$ and a discrimination confidence $D_{y2}(\hat{y})$ of $\hat{y}$.

In this case, in training the model of the second stage, an adversarial learning constraint is expressed as:

$$L_{adv2} = \log(D_{y2}(y')) + \log(1 - D_{y2}(\hat{y})) + \log(D_{x2}(x')) + \log(1 - D_{x2}(\hat{x})) \quad (5)$$

where $L_{adv2}$ is a loss function based on the adversarial learning constraint. The model training procedure may include a procedure of adjusting model parameters of the second stage image conversion discrimination model and the second stage image reverse conversion discrimination model to maximize $L_{adv2}$. The procedure of maximizing $L_{adv2}$ is equivalent to the procedure of maximizing $D_{x2}(x')$ and $D_{y2}(y')$ and minimizing $D_{x2}(\hat{x})$ and $D_{y2}(\hat{y})$.

In a training procedure of the second stage, optimizing the image conversion model and the discrimination model in an adversarial manner is expressed as:

$$G_2, F_2 = \arg\min_{G_2, F_2}(\max_{D_{x2}, D_{y2}}(L_{adv2} + \lambda_2 L_{cyc2})) \quad (6)$$

where $\lambda_2$ is a cycle consistency constraint weight. Procedures of maximizing $L_{adv2}$ and minimizing $L_{cyc2}$ may be performed alternately. That is, in training with a sample, $L_{adv2}$ is maximized before $L_{cyc2}$ is minimized, and in training with a next sample, $L_{cyc2}$ is minimized before $L_{adv2}$ is maximized.

In this embodiment, two models are trained, i.e., the image conversion model and training of the discrimination model. The purpose of training the image conversion model is to learn how to convert an image of a category into an image of another category, and the purpose of training the discrimination model is to learn to determine whether an input image is an original image or an image generated through the image conversion model. In this way, the image conversion model learns to generate an image that is very similar with the original image, to interfere the determination of the discrimination model, and the discrimination model learns to precisely determine whether an image is an original image or a generated image. The two models fight against each other and promote each other, so that the performance of the trained model is improved. As a result, by using the trained image conversion model to convert an image, a problem of image distortion can be greatly overcome, thereby improving the image conversion performance.

In an embodiment, a person skilled in the art may understand that, in supervised training of the second stage image conversion model and the second stage image reverse conversion model, the adversarial training may also be performed with the second stage image conversion discrimination model and the second stage image reverse conversion discrimination model.

In an embodiment, the obtaining, according to the first sample first stage conversion image and the first sample second stage conversion image, a first sample conversion image corresponding to the first sample and belonging to the second image category includes: inputting the first sample, the first sample first stage conversion image, and the first sample second stage conversion image into a first weight prediction model, to obtain a weight matrix corresponding to the first sample second stage conversion image; obtaining a weight matrix corresponding to the first sample first stage conversion image according to the weight matrix corresponding to the first sample second stage conversion image; and fusing the first sample first stage conversion image and the first sample second stage conversion image according to the weight matrix corresponding to the first sample first stage conversion image and the weight matrix corresponding to the first sample second stage conversion image, to obtain the first sample conversion image corresponding to the first sample and belonging to the second image category.

The obtaining, according to the first sample first stage recovery image and the first sample second stage recovery image, a first sample recovery image corresponding to the first sample and belonging to the first image category includes: inputting the first sample conversion image, the first sample first stage recovery image, and the first sample second stage recovery image into a second weight prediction model, to obtain a weight matrix corresponding to the first sample second stage recovery image; obtaining a weight matrix corresponding to the first sample first stage recovery image according to the weight matrix corresponding to the first sample second stage recovery image; and fusing the first sample first stage recovery image and the first sample second stage recovery image according to the weight matrix corresponding to the first sample first stage recovery image and the weight matrix corresponding to the first sample second stage recovery image, to obtain the first sample recovery image corresponding to the first sample and belonging to the first image category.

The obtaining, according to the second sample first stage conversion image and the second sample second stage conversion image, a second sample conversion image corresponding to the second sample and belonging to the first image category includes: inputting the second sample, the second sample first stage conversion image, and the second sample second stage conversion image into the second weight prediction model, to obtain a weight matrix corresponding to the second sample second stage conversion image; obtaining a weight matrix corresponding to the second sample first stage conversion image according to the weight matrix corresponding to the second sample second stage conversion image; and fusing the second sample first stage conversion image and the second sample second stage conversion image according to the weight matrix corresponding to the second sample first stage conversion image and the weight matrix corresponding to the second sample second stage conversion image, to obtain the second sample conversion image corresponding to the second sample and belonging to the first image category.

The obtaining, according to the second sample first stage recovery image and the second sample second stage recovery image, a second sample recovery image corresponding to the second sample and belonging to the second image category includes: inputting the second sample conversion image, the second sample first stage recovery image, and the second sample second stage recovery image into the first weight prediction model, to obtain a weight matrix corresponding to the second sample second stage recovery image; obtaining a weight matrix corresponding to the second sample first stage recovery image according to the weight matrix corresponding to the second sample second stage recovery image; and fusing the second sample first stage recovery image and the second sample second stage recovery image according to the weight matrix corresponding to the second sample first stage recovery image and the weight matrix corresponding to the second sample second stage recovery image, to obtain the second sample recovery image corresponding to the second sample and belonging to the second image category.

The adjusting the second stage image conversion model and the second stage image reverse conversion model according to a difference between the first sample and the first sample recovery image, and a difference between the second sample and the second sample recovery image, until a training stop condition is satisfied includes: adjusting the first weight prediction model, the second weight prediction model, the second stage image conversion model and the second stage image reverse conversion model according to the difference between the first sample and the first sample recovery image, and the difference between the second sample and the second sample recovery image, until the training stop condition is satisfied.

Referring to FIG. 5, the computer device may input $x'$, y1 and y2 into the first weight prediction model Gf, to obtain a weight matrix $\alpha_{x'}$ of y2 outputted by Gf, and then obtain a weight matrix of y1 as (1- $\alpha_{x'}$). In this case, a first sample conversion image is $\hat{y}=G_f(x',y_1,y_2)=\alpha_{x'}\odot y_2+(1-\alpha_{x'})\odot y_1$. The computer device may further input $\hat{y}$, $F_1(\hat{y})$ and $F_2(F_1(\hat{y}))$ into a second weight prediction model Ff, to obtain a weight matrix $\alpha_{\hat{y}}$ of $F_2(F_1(\hat{y}))$ outputted by Ff, and then obtain a weight matrix of $F_1(\hat{y})$ as (1-$\alpha_{\hat{y}}$). In this case, a first sample recovery image is

$$x'' = F_f(\hat{y}, F_1(\hat{y}), F_2(F_1(\hat{y}))) = \alpha_{\hat{y}} \odot F_2(F_1(\hat{y})) + (1 - \alpha_{\hat{y}}) \odot F_1(\hat{y})$$

The computer device may input $y'$, x1 and x2 into the second weight prediction model Ff, to obtain a weight matrix $\alpha_{y'}$ of x2 outputted by Ff, and then obtain a weight matrix of x1 as (1-$\alpha_{y'}$). In this case, the second sample conversion image is $\hat{x}=F_f(y',x_1,x_2)=\alpha_{y'}\odot x_2+(1-\alpha_{y'})\odot x_1$. The computer device may further input $\hat{x}$, $G_1(\hat{x})$ and $G_2(G_1(\hat{x}))$ into the first weight prediction model Gf, to obtain a weight matrix $\alpha_{\hat{x}}$ of $G_2(G_1(\hat{x}))$ outputted by Gf, and then obtain a weight matrix of $G_1(\hat{x})$ as (1-$\alpha_{\hat{x}}$). In this case, the second sample recovery image is

$$y'' = G_f(\hat{x}, G_1(\hat{x}), G_2(G_1(\hat{x}))) = \alpha_{\hat{x}} \odot G_2(G_1(\hat{x})) + (1 - \alpha_{\hat{x}}) \odot G_1(\hat{x})$$

In this embodiment, the machine learning model is trained unsupervisedly by using the cycle consistency constraint, so that a machine learning model converting any two image categories of images into each other is obtained through training. Therefore, the training of the machine learning model does not depend on a sample label as in the conventional supervised training, thereby expanding image processing application scenarios.

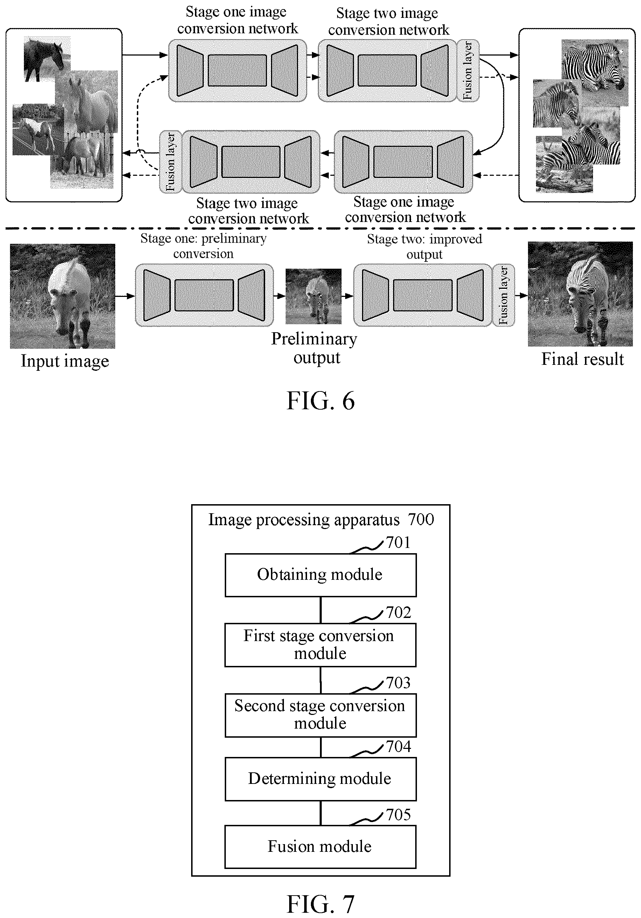

FIG. 6 is a schematic diagram of images before and after image conversion according to an embodiment. Referring to FIG. 6, as can be seen, an input image is an image of a first image category, for example, a horse in the input image is a horse of a single color. An output image is an image of the second image category, for example, a horse in the output image is a horse of multiple colors.

It is to be understood that, although the steps are displayed sequentially according to the indications of the arrows in the flowcharts of the embodiments, these steps are not necessarily performed sequentially according to the sequence indicated by the arrows. Unless otherwise specifically described in the specification, there is no strict limitation on the sequence of these steps, and these steps may be performed in another sequence. In addition, at least a part of the steps in the foregoing embodiments may include multiple substeps or multiple stages. These substeps or stages are not necessarily performed and completed at the same time, but may be performed at different times. Besides, these substeps or stages may be not necessarily performed sequentially, but may be performed in turn or alternately with other steps or at least a part of substeps or stages of other steps.

As shown in FIG. 7, in an embodiment, an image processing apparatus 700 is provided. Referring to FIG. 7, the image processing apparatus 700 includes: an obtaining module 701, a first stage conversion module 702, a second stage conversion module 703, a determining module 704, and a fusion module 705. All or some of the modules included in the image processing apparatus 700 may be implemented by software, hardware, or a combination thereof.

The obtaining module 701 is configured to obtain a to-be-processed image belonging to a first image category.

The first stage conversion module 702 is configured to input the to-be-processed image into a first stage image conversion model, to obtain a first intermediate image.

The second stage conversion module 703 is configured to convert the first intermediate image into a second intermediate image through a second stage image conversion model.

The determining module 704 is configured to determine a second weight matrix corresponding to the second intermediate image; and determine a first weight matrix corresponding to the first intermediate image.

The fusion module 705 is configured to fuse the first intermediate image and the second intermediate image according to the first weight matrix and the second weight matrix, to obtain a target image corresponding to the to-be-processed image and belonging to a second image category.

In an embodiment, the first stage conversion module 702 is further configured to perform downsampling on the to-be-processed image, to obtain a compressed image with a reduced image size; and input the compressed image into the first stage image conversion model, to output the first intermediate image with an image size that is the same as the image size of the compressed image. The second stage conversion module 703 is further configured to perform upsampling on the first intermediate image, to obtain an enlarged image with an image size that is the same as an image size of the to-be-processed image; and input the enlarged image into the second stage image conversion model, to output the second intermediate image with an image size that is the same as the image size of the enlarged image.

In an embodiment, the determining module 704 is further configured to input the to-be-processed image, the first intermediate image and the second intermediate image into a first weight prediction model, to obtain the second weight matrix corresponding to the second intermediate image; and obtain the first weight matrix corresponding to the first intermediate image according to the second weight matrix, where a sum of the first weight matrix and the second weight matrix is a preset matrix.

In an embodiment, the fusion module 705 is further configured to multiply pixel values of the first intermediate image respectively by matrix elements of the first weight matrix in corresponding matrix positions, to obtain a first target image belonging to the second image category; multiply pixel values of the second intermediate image respectively by matrix elements of the second weight matrix in corresponding matrix positions, to obtain a second target image belonging to the second image category; and obtain, according to the first target image and the second target image, the target image corresponding to the to-be-processed image and belonging to the second image category.

In an embodiment, the image processing apparatus 700 further includes: a first stage model training module 706, configured to obtain a first sample belonging to the first image category and a second sample belonging to the second image category; process the first sample sequentially by the first stage image conversion model and a first stage image reverse conversion model, to obtain a first sample single stage recovery image; process the second sample sequentially by the first stage image reverse conversion model and the first stage image conversion model, to obtain a second sample single stage recovery image; and adjust the first stage image conversion model and the first stage image reverse conversion model according to a difference between the first sample and the first sample single stage recovery image, and a difference between the second sample and the second sample single stage recovery image, until a training stop condition is satisfied.

In an embodiment, the first stage model training module 706 is further configured to obtain a first sample single stage conversion image outputted by the first stage image conversion model after the first sample is processed by the first stage image conversion model; obtain a second sample single stage conversion image outputted by the first stage image reverse conversion model after the second sample is processed by the first stage image reverse conversion model; input the first sample into a first stage image reverse conversion discrimination model to obtain a discrimination confidence of the first sample, and input the second sample single stage conversion image into the first stage image reverse conversion discrimination model to obtain a discrimination confidence of the second sample single stage conversion image; and input the second sample into a first stage image conversion discrimination model to obtain a discrimination confidence of the second sample, and input the first sample single stage conversion image into the first stage image conversion discrimination model to obtain a discrimination confidence of the first sample single stage conversion image; and adjust, until the training stop condition is satisfied, the first stage image conversion discrimination model, the first stage image reverse conversion discrimination model, the first stage image conversion model and the first stage image reverse conversion model by means of maximizing the discrimination confidence of the first sample and the discrimination confidence of the second sample, and minimizing the discrimination confidence of the second sample single stage conversion image, the discrimination confidence of the first sample single stage conversion image, the difference between the first sample and the first sample single stage recovery image, and the difference between the second sample and the second sample single stage recovery image.

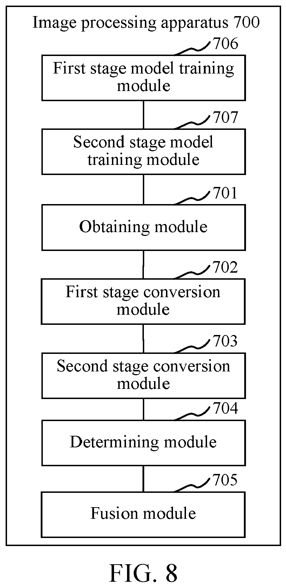

As shown in FIG. 8, in an embodiment, the image processing apparatus 700 further includes: the first stage model training module 706 and a second stage model training module 707.

The second stage model training module 707 is configured to process the first sample sequentially by the first stage image conversion model and the second stage image conversion model, to obtain a first sample first stage conversion image outputted by the first stage image conversion model, and a first sample second stage conversion image outputted by the second stage image conversion model; obtain, according to the first sample first stage conversion image and the first sample second stage conversion image, a first sample conversion image corresponding to the first sample and belonging to the second image category; process the first sample conversion image sequentially by the first stage image reverse conversion model and a second stage image reverse conversion model, to obtain a first sample first stage recovery image outputted by the first stage image reverse conversion model, and a first sample second stage recovery image outputted by the second stage image reverse conversion model; obtain, according to the first sample first stage recovery image and the first sample second stage recovery image, a first sample recovery image corresponding to the first sample and belonging to the first image category; process the second sample sequentially by the first stage image reverse conversion model and the second stage image reverse conversion model, to obtain a second sample first stage conversion image outputted by the first stage image reverse conversion model, and a second sample second stage conversion image outputted by the second stage image reverse conversion model; obtain, according to the second sample first stage conversion image and the second sample second stage conversion image, a second sample conversion image corresponding to the second sample and belonging to the first image category; process the second sample conversion image sequentially by the first stage image conversion model and the second stage image conversion model, to obtain a second sample first stage recovery image outputted by the first stage image conversion model, and a second sample second stage recovery image outputted by the second stage image conversion model; obtain, according to the second sample first stage recovery image and the second sample second stage recovery image, a second sample recovery image corresponding to the second sample and belonging to the second image category; and adjust the second stage image conversion model and the second stage image reverse conversion model according to a difference between the first sample and the first sample recovery image, and a difference between the second sample and the second sample recovery image, until a training stop condition is satisfied.

In an embodiment, the second stage model training module 707 is configured to inputting the first sample into a second stage image reverse conversion discrimination model to obtain a discrimination confidence of the first sample, and inputting the second sample conversion image into the second stage image reverse conversion discrimination model to obtain a discrimination confidence of the second sample conversion image; and inputting the second sample into a second stage image conversion discrimination model to obtain a discrimination confidence of the second sample, and inputting the first sample conversion image into the second stage image conversion discrimination model to obtain a discrimination confidence of the first sample conversion image; and adjust, until a training stop condition is satisfied, the second stage image conversion discrimination model, the second stage image reverse conversion discrimination model, the second stage image conversion model and the second stage image reverse conversion model by means of maximizing the discrimination confidence of the first sample and the discrimination confidence of the second sample, and minimizing the discrimination confidence of the second sample conversion image, the discrimination confidence of the first sample conversion image, the difference between the first sample and the first sample recovery image, and the difference between the second sample and the second sample recovery image.

In an embodiment, the second stage model training module 707 is further configured to: input the first sample, the first sample first stage conversion image, and the first sample second stage conversion image into a first weight prediction model, to obtain a weight matrix corresponding to the first sample second stage conversion image; obtain a weight matrix corresponding to the first sample first stage conversion image according to the weight matrix corresponding to the first sample second stage conversion image; and fuse the first sample first stage conversion image and the first sample second stage conversion image according to the weight matrix corresponding to the first sample first stage conversion image and the weight matrix corresponding to the first sample second stage conversion image, to obtain the first sample conversion image corresponding to the first sample and belonging to the second image category; input the first sample conversion image, the first sample first stage recovery image, and the first sample second stage recovery image into a second weight prediction model, to obtain a weight matrix corresponding to the first sample second stage recovery image; obtain a weight matrix corresponding to the first sample first stage recovery image according to the weight matrix corresponding to the first sample second stage recovery image; and fuse the first sample first stage recovery image and the first sample second stage recovery image according to the weight matrix corresponding to the first sample first stage recovery image and the weight matrix corresponding to the first sample second stage recovery image, to obtain the first sample recovery image corresponding to the first sample and belonging to the first image category; input the second sample, the second sample first stage conversion image, and the second sample second stage conversion image into the second weight prediction model, to obtain a weight matrix corresponding to the second sample second stage conversion image; obtain a weight matrix corresponding to the second sample first stage conversion image according to the weight matrix corresponding to the second sample second stage conversion image; and fuse the second sample first stage conversion image and the second sample second stage conversion image according to the weight matrix corresponding to the second sample first stage conversion image and the weight matrix corresponding to the second sample second stage conversion image, to obtain the second sample conversion image corresponding to the second sample and belonging to the first image category; input the second sample conversion image, the second sample first stage recovery image, and the second sample second stage recovery image into the first weight prediction model, to obtain a weight matrix corresponding to the second sample second stage recovery image; obtain a weight matrix corresponding to the second sample first stage recovery image according to the weight matrix corresponding to the second sample second stage recovery image; and fuse the second sample first stage recovery image and the second sample second stage recovery image according to the weight matrix corresponding to the second sample first stage recovery image and the weight matrix corresponding to the second sample second stage recovery image, to obtain the second sample recovery image corresponding to the second sample and belonging to the second image category; and adjust the first weight prediction model, the second weight prediction model, the second stage image conversion model and the second stage image reverse conversion model according to the difference between the first sample and the first sample recovery image, and the difference between the second sample and the second sample recovery image, until a training stop condition is satisfied.

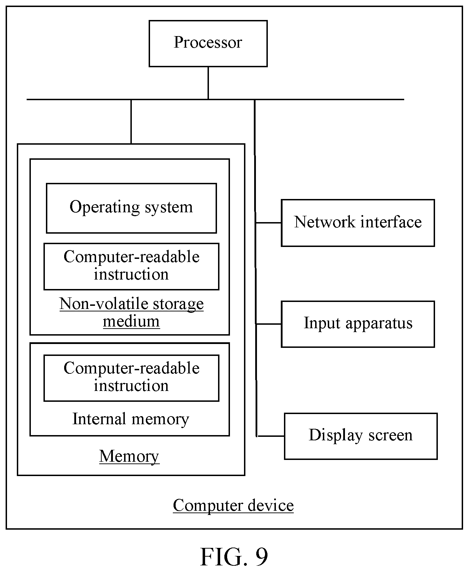

FIG. 9 is a diagram of an internal structure of a computer device according to an embodiment. The computer device may be specifically a user terminal. As shown in FIG. 9, the computer device includes a processor, a memory, a network interface, an input device, and a display screen that are connected through a system bus. The memory includes a non-volatile storage medium and an internal memory. The non-volatile storage medium of the computer device stores an operating system, and may further store a computer program or a computer-readable instruction. The computer program or the computer-readable instruction, when executed by the processor, may cause the processor to perform the image processing method. The internal memory may also store a computer program or a computer-readable instruction, and the computer program or the computer-readable instruction, when executed by the processor, may cause the processor to perform the image processing method. The display screen of the computer device may be a liquid crystal display screen, an e-ink display screen, or the like. The input apparatus may be a touch layer covering the display screen, or may be a button, a trackball, or a touchpad disposed on a housing of the computer device, or may be an external keyboard, touchpad, or mouse or the like. A person skilled in the art may understand that, the structure shown in FIG. 9 is only a block diagram of a part of a structure related to a solution of the present disclosure and does not limit the computer device to which the solution of the present disclosure is applied. Specifically, the computer device may include more or less members than those in the drawings, or include a combination of some members, or include different member layouts.

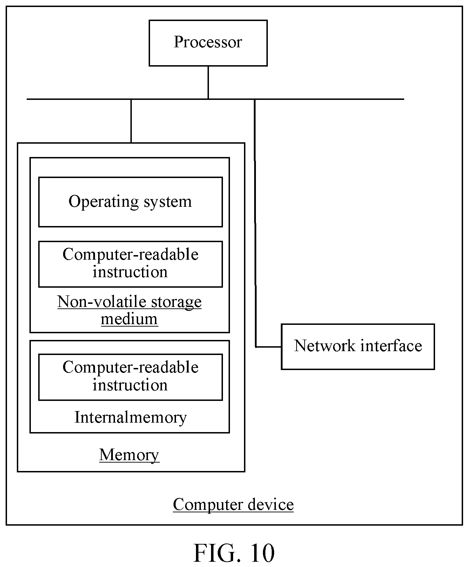

FIG. 10 is a diagram of an internal structure of a computer device according to an embodiment. The computer device may be specifically a user terminal or a server. As shown in FIG. 10, the computer device includes a processor, a memory, and a network interface that are connected through a system bus. The memory includes a non-volatile storage medium and an internal memory. The non-volatile storage medium of the computer device stores an operating system, and may further store a computer-readable instruction. The computer-readable instruction, when executed by the processor, may cause the processor to perform the image processing method. The internal memory may also store a computer-readable instruction, and the computer-readable instruction, when executed by a processor, may cause the processor to perform the image processing method. A person skilled in the art may understand that, the structure shown in FIG. 10 is only a block diagram of a part of a structure related to a solution of the present disclosure and does not limit the computer device to which the solution of the present disclosure is applied. Specifically, the computer device may include more or less members than those in the drawings, or include a combination of some members, or include different member layouts.

In an embodiment, the image processing apparatus provided in the present disclosure may be implemented in a form of a computer-readable instruction. The computer-readable instruction may run on the computer device shown in FIG. 9 or FIG. 10. The non-volatile storage medium of the computer device may store instruction modules constituting the image processing apparatus, such as the obtaining module 701, the first stage conversion module 702, the second stage conversion module 703, the determining module 704, and the fusion module 705 shown in FIG. 7. The computer-readable instructions constituted by the instruction modules cause the processor to perform steps of the image processing method in the various embodiments of the present disclosure.

For example, the computer device shown in FIG. 9 or FIG. 10 may obtain a to-be-processed image belonging to a first image category by using the obtaining module 701 in the image processing apparatus 700 shown in FIG. 7; input the to-be-processed image into a first stage image conversion model by using the first stage conversion module 702, to obtain a first intermediate image; convert the first intermediate image into a second intermediate image through a second stage image conversion model by using the second stage conversion module 703; determine a weight matrix corresponding to the first intermediate image and a weight matrix corresponding to the second intermediate image by using the determining module 704; and fuse the first intermediate image and the second intermediate image according to the corresponding weight matrices by using the fusion module 705, to obtain a target image corresponding to the to-be-processed image and belonging to a second image category.

In an embodiment, a computer-readable storage medium is provided. The computer-readable storage medium stores a computer-readable instruction, and the computer-readable instruction, when executed by a processor, causes the processor to perform the steps in the foregoing image processing method. The steps in the image processing method may be the steps in the image processing method in any one of the foregoing embodiments.

In an embodiment, a computer device is provided, including: a memory and a processor. The memory stores a computer-readable instruction, and the computer-readable instruction, when executed by a processor, causes the processor to perform the steps in the foregoing image processing method. The steps in the image processing method may be the steps in the image processing method in any one of the foregoing embodiments.

A person of ordinary skill in the art may understand that some or all procedures in the method in the foregoing embodiments may be implemented by a computer-readable instruction instructing related hardware. The program may be stored in a non-volatile computer readable storage medium. When the program is executed, the procedures in the foregoing method embodiments are performed. Any reference to a memory, storage, database or other medium in the various embodiments provided in the present disclosure may include a non-volatile and/or volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external cache. By way of illustration rather than limitation, the RAM is available in a variety of forms, such as a static RAM (SRAM), a dynamic RAM (DRAM), a synchronous DRAM (SDRAM), a dual data rate SDRAM (DDRSDRAM), an enhanced SDRAM (ESDRAM), a synchronization link (Synchlink) DRAM (SLDRAM), a memory Bus (Rambus) direct RAM (RDRAM), a direct memory bus dynamic RAM (DRDRAM), and a memory bus dynamic RAM (RDRAM).

The foregoing embodiments only show several implementations of the technical solution of the present disclosure and are described in detail, but they are not to be construed as a limit to the patent scope of the present disclosure. A person of ordinary skill in the art may make various changes and improvements without departing from the scope of the present disclosure, which shall all fall within the protection scope of the present disclosure. Therefore, the protection scope of the patent of the present disclosure shall be subject to the appended claims.

## Claims

1. An image processing method, performed by a computer device, the method comprising:

   determining a to-be-processed image belonging to a first image category;
   inputting the to-be-processed image into a first stage image conversion model, to determine a first intermediate image;
   converting the first intermediate image into a second intermediate image through a second stage image conversion model;
   determining a second weight matrix corresponding to the second intermediate image;
   determining a first weight matrix corresponding to the first intermediate image; and
   fusing the first intermediate image and the second intermediate image according to the first weight matrix and the second weight matrix, to determine a target image corresponding to the to-be-processed image and belonging to a second image category;
   wherein the first stage image conversion model is a machine learning model used for converting an image of the first image category into an image of the
   second image category, the first image category and the second image category being a category to which an image feature of an image belongs, wherein the image feature includes at least one of: a color feature, a style feature and a content feature;
   the first stage image conversion model being trained by a method of adversarial learning, including determining a first sample belonging to the first image category and a second sample belonging to the second image category, and using

$$G_1, F_1 = \arg\min_{G_1, F_1} (\max_{D_{x1}, D_{y1}} (L_{adv1} + \lambda_1 L_{cyc1}))$$

wherein $\lambda_1$ is a cycle consistency constraint weight;

$G_1$ is the first stage image conversion model;

$F_1$ is a first stage image reverse conversion model;

$D_{x1}$ is a first stage image reverse conversion discrimination model;

$D_{y1}$ is a first stage image conversion discrimination model;

$L_{adv1}$ is an adversarial learning constraint expressed as:

$$L_{adv1} = \log(D_{y1}(y')) + \log(1 - D_{y1}(G_1(x'))) + \log(D_{x1}(x')) + \log(1 - D_{x1}(F_1(y'))) \; ;$$

and $L_{cyc1}$ is a cycle consistency constraint expressed as :

$$L_{cyc1} = \left\| F_1(G_1(x')) - x' \right\|_1 + \left\| G_1(F_1(y')) - y' \right\|_1 ,$$

wherein $F_1(G_1(x'))$ is the first sample single stage recovery image, x' is the first sample, $G_1(F_1(y'))$ is the second sample single stage recovery image and y' is the second sample;

wherein the second stage image conversion model is a convolutional neural network model used for further converting the image outputted by the first stage image conversion model;

the second stage image conversion model being trained, after the first stage image conversion model being trained, by using

$$G_2, F_2 = \arg\min_{G_2,F_2}( \max_{D_{x2},D_{y2}} (L_{adv2} + \lambda_2 L_{cyc2})),$$

wherein

where $\lambda_2$ is a cycle consistency constraint weight;

$G_2$ is the second stage image conversion model;

$F_2$ is a second stage image reverse conversion model,

$D_{x2}$ is a second stage image reverse conversion discrimination model,

$D_{y2}$ is a second stage image conversion discrimination model;

$L_{adv2}$ an adversarial learning constraint, expressed as

$$L_{adv2} = \log(D_{y2}(y')) + \log(1 - D_{y2}(\hat{y})) + \log(D_{x2}(x')) + \log(1 - D_{x2}(\hat{x}))$$

and $L_{cyc2}$ is a second stage cycle consistency constraint expressed as

$$L_{cyc2} = \left\| F_f(\hat{y}, F_1(\hat{y}), F_2(F_1(\hat{y}))) - x' \right\|_1 + \left\| G_f(\hat{x}, G_1(\hat{x}), G_2(G_1(\hat{x}))) - y' \right\|_1$$

wherein Ff is a second weight prediction model and Gf is a first weight prediction model;

$\hat{x} = F_f(y', x_1, x_2)$ is a second sample conversion image corresponding to the second sample, $x_1 = F_1(y')$ is a second sample first stage conversion image, $x_2 = F_2(x_1)$ is a second sample second stage conversion image;

$\hat{y} = G_f(x', y_1, y_2)$ is a first sample conversion image corresponding to the first sample and belonging to the second image category;

wherein the fusing the first intermediate image and the second intermediate image according to the first weight matrix and the second weight matrix is done by inputting the first sample image x', the first intermediate image y1 and the second intermediate image y2 into the first weight prediction model Gf to obtain the second weight matrix $\alpha_{x'}$ outputted by Gf, and then obtain the first weight matrix as $(1-\alpha_{x'})$, wherein the first sample conversion image is obtained as a result of the fusing the first intermediate image and the second intermediate image, as $\hat{y} = G_f(x', y_1, y_2) = \alpha_{x'} \odot y_2 + (1 - \alpha_{x'}) \odot y_1$.

2. The image processing method according to claim 1, wherein

the inputting the to-be-processed image into the first stage image conversion model, to determine the first intermediate image comprises:

performing downsampling on the to-be-processed image, to determine a compressed image with a reduced image size; and
inputting the compressed image into the first stage image conversion model, to output the first intermediate image with an image size that is the same as the image size of the compressed image; and
the converting the first intermediate image into a second intermediate image through a second stage image conversion model comprises:

performing upsampling on the first intermediate image, to determine an enlarged first intermediate image with an image size that is the same as an image size of the to-be-processed image; and
inputting the enlarged first intermediate image into the second stage image conversion model, to output the second intermediate image with an image size that is the same as the image size of the enlarged first intermediate image.

3. A computer device, comprising a memory and a processor, wherein the memory stores a computer-readable instruction, and the computer-readable instruction, when executed by the processor, causes the processor to perform operations of the image processing method according to any one of claims 1 to 2.

4. A non-volatile storage medium storing a computer-readable instruction, wherein the computer-readable instruction, when executed by one or more processors, causes the one or more processors to perform operations of the image processing method according to any one of claims 1 to 2.

## Patentansprüche

1. Ein Bildverarbeitungsverfahren, durchgeführt von einem Computergerät, das Verfahren umfasst:

Bestimmung eines zu verarbeitenden Bildes, das zu einer ersten Bildkategorie gehört;
Eingabe des zu verarbeitenden Bildes in ein erstes Stufenbildumwandlungsmodell, um ein erstes Zwischenbild zu bestimmen;
Umwandlung des ersten Zwischenbildes in ein zweites Zwischenbild durch ein zweites Stufenbildumwandlungsmodell;
Bestimmung einer zweiten Gewichtsmatrix, die dem zweiten Zwischenbild entspricht;
Bestimmung einer ersten Gewichtsmatrix, die dem ersten Zwischenbild entspricht; und
Verschmelzung des ersten Zwischenbildes und des zweiten Zwischenbildes gemäß der ersten Gewichtsmatrix und der zweiten Gewichtsmatrix, um ein Zielbild zu bestimmen, das dem zu verarbeitenden Bild entspricht und zu einer zweiten Bildkategorie gehört;
wobei das erste Stufenbildumwandlungsmodell ein maschinelles Lernmodell ist, das zur Umwandlung eines Bildes der ersten Bildkategorie in ein Bild der zweiten Bildkategorie verwendet wird, wobei die erste Bildkategorie und die zweite Bildkategorie eine Kategorie sind, zu der ein Bildmerkmal eines Bildes gehört, wobei das Bildmerkmal mindestens eines der folgenden Merkmale umfasst: ein Farbmerkmal, ein Stilmerkmal und ein Inhaltmerkmal;
das erste Stufenbildumwandlungsmodell wird durch ein Verfahren des adversativen Lernens trainiert, einschließlich der Bestimmung einer ersten Probe, die zur ersten Bildkategorie gehört, und einer zweiten Probe, die zur zweiten Bildkategorie gehört, und der Verwendung

$$G_1, F_1 = \arg\min_{G_1, F_1}( \max_{D_{x1}, D_{y1}} (L_{adv1} + \lambda_1 L_{cyc1}))$$

wobei $\lambda_1$ ein Zykluskonsistenzbeschränkungsgewicht ist;
$G_1$ ist das erste Stufenbildumwandlungsmodell;
$F_1$ ist ein erstes Stufenbildrückumwandlungsmodell;
$D_{x1}$ ist ein erstes Stufenbildrückumwandlungsdiskriminierungsmodell;
$D_{y1}$ ist ein erstes Stufenbildumwandlungsdiskriminierungsmodell;
$L_{adv1}$ ist eine adversative Lernbeschränkung, ausgedrückt als:

$$L_{adv1} = \log(D_{y1}(y')) + \log(1 - D_{y1}(G_1(x'))) + \log(D_{x1}(x')) + \log(1 - D_{x1}(F_1(y')))$$ ;

und $L_{cyc1}$ ist eine Zykluskonsistenzbeschränkung, ausgedrückt als :

$$L_{cyc1} = \left\| F_1(G_1(x')) - x' \right\|_1 + \left\| G_1(F_1(y')) - y' \right\|_1$$ ,

wobei $F_1(G_1x'))$ das erste Proben-Einstufen-Wiederherstellungsbild ist, x' ist die erste Probe, $G_1(F_1(y))$ ist das zweite Proben-Einstufen-Wiederherstellungsbild und y' ist die zweite Probe;

wobei das zweite Stufenbildumwandlungsmodell ein Faltungsneuronales Netzwerkmodell ist, das zur weiteren Umwandlung des durch das erste Stufenbildumwandlungsmodell ausgegebenen Bildes verwendet wird;

das zweite Stufenbildumwandlungsmodell wird trainiert, nachdem das erste Stufenbildumwandlungsmodell trainiert wurde, durch die Verwendung von

$$G_2, F_2 = \arg\min_{G_2, F_2} (\max_{D_{x2}, D_{y2}} (L_{adv2} + \lambda_2 L_{cyc2}))$$ ,

wobei

wo $\lambda_2$ ein Zykluskonsistenzbeschränkungsgewicht ist;
$G_2$ ist das zweite Stufenbildumwandlungsmodell;
$F_2$ ist ein zweites Stufenbildrückumwandlungsmodell,
$D_{x2}$ ist ein zweites Stufenbildrückumwandlungsdiskriminierungsmodell,
$D_{y2}$ ist ein zweites Stufenbildumwandlungsdiskriminierungsmodell;
$L_{adv2}$ ist eine adversative Lernbeschränkung, ausgedrückt als

$$L_{adv2} = \log(D_{y2}(y')) + \log(1 - D_{y2}(\hat{y})) + \log(D_{x2}(x')) + \log(1 - D_{x2}(\hat{x}))$$

und Lcyc2 ist eine zweite Stufenzykluskonsistenzbeschränkung, ausgedrückt als

$$L_{cyc2} = \left\| F_f(\hat{y}, F_1(\hat{y}), F_2(F_1(\hat{y}))) - x' \right\|_1 + \left\| G_f(\hat{x}, G_1(\hat{x}), G_2(G_1(\hat{x}))) - y' \right\|_1$$

wobei $F_f$ ein zweites Gewichtsvorhersagemodell und Gf ein erstes Gewichtsvorhersagemodell ist;
$\hat{x} = F_f(y', x_1, x_2)$ist ein zweites Probenumwandlungsbild, das der zweiten Probe entspricht, $x_1 = F_1(y')$ ist ein zweites Proben-Erststufen-Umwandlungsbild, $x_2 = F_2(x_1)$ ist ein zweites Proben-Zweitstufen-Umwandlungsbild;
$\hat{y} = G_f(x', y_1, y_2)$ ist ein erstes Probenumwandlungsbild, das der ersten Probe entspricht und zur zweiten Bildkategorie gehört;
wobei die Verschmelzung des ersten Zwischenbildes und des zweiten Zwischenbildes gemäß der ersten Gewichtsmatrix und der zweiten Gewichtsmatrix erfolgt, indem das erste Probenbild x', das erste Zwischenbild $y_1$ und das zweite Zwischenbild $y_2$ in das erste Gewichtsvorhersagemodell $G_f$ eingegeben werden, um die zweite Gewichtsmatrix $\alpha_{x'}$ zu erhalten, die von $G_f$ ausgegeben wird, und dann die erste Gewichtsmatrix als (1- $\alpha_{x'}$) zu erhalten, wobei das erste Probenumwandlungsbild als Ergebnis der Verschmelzung des ersten Zwischenbildes und des $\hat{y} = G_f(x',y_1,y_2)=\alpha_{x'} \odot y_2 + (1 - \alpha_{x'}) \odot y_1$. zweiten Zwischenbildes erhalten wird, als. $\hat{y}=G_f(x',y_1,y_2)=\alpha_{x'} \odot y_2 +(1-\alpha_{x'})\odot y_1$.

2. Das Bildverarbeitungsverfahren nach Anspruch 1, wobei
die Eingabe des zu verarbeitenden Bildes in das erste Stufenbildumwandlungsmodell, um das erste Zwischenbild zu bestimmen, umfasst:

Durchführung von Heruntertasten auf dem zu verarbeitenden Bild, um ein komprimiertes Bild mit einer reduzierten Bildgröße zu bestimmen; und

Eingabe des komprimierten Bildes in das erste Stufenbildumwandlungsmodell, um das erste Zwischenbild mit einer Bildgröße auszugeben, die der Bildgröße des komprimierten Bildes entspricht; und die Umwandlung des ersten Zwischenbildes in ein zweites Zwischenbild durch ein zweites Stufenbildumwandlungsmodell umfasst:

Durchführung von Hochskalieren auf dem ersten Zwischenbild, um ein vergrößertes erstes Zwischenbild mit einer Bildgröße zu bestimmen, die der Bildgröße des zu verarbeitenden Bildes entspricht; und Eingabe des vergrößerten ersten Zwischenbildes in das zweite Stufenbildumwandlungsmodell, um das zweite Zwischenbild mit einer Bildgröße auszugeben, die der Bildgröße des vergrößerten ersten Zwischenbildes entspricht.

3. Ein Computergerät, bestehend aus einem Speicher und einem Prozessor, wobei der Speicher eine computerlesbare Anweisung speichert, und die computerlesbare Anweisung, wenn sie vom Prozessor ausgeführt wird, den Prozessor dazu veranlasst, Operationen des Bildverarbeitungsverfahrens gemäß einem der Ansprüche 1 bis 2 durchzuführen.

4. Ein nichtflüchtiges Speichermedium, das eine computerlesbare Anweisung speichert, wobei die computerlesbare Anweisung, wenn sie von einem oder mehreren Prozessoren ausgeführt wird, die ein oder mehreren Prozessoren dazu veranlasst, Operationen des Bildverarbeitungsverfahrens gemäß einem der Ansprüche 1 bis 2 durchzuführen.

**Revendications**

1. Une méthode de traitement d'image, réalisée par un dispositif informatique, la méthode comprenant :

déterminer une image à traiter appartenant à une première catégorie d'image ;
entrer l'image à traiter dans un modèle de conversion d'image de première étape, pour déterminer une première image intermédiaire ;
convertir la première image intermédiaire en une deuxième image intermédiaire à travers un modèle de conversion d'image de deuxième étape ;
déterminer une deuxième matrice de poids correspondant à la deuxième image intermédiaire ;
déterminer une première matrice de poids correspondant à la première image intermédiaire ; et
fusionner la première image intermédiaire et la deuxième image intermédiaire selon la première matrice de poids et la deuxième matrice de poids, pour déterminer une image cible correspondant à l'image à traiter et appartenant à une deuxième catégorie d'image ;
où le modèle de conversion d'image de première étape est un modèle d'apprentissage automatique utilisé pour convertir une image de la première catégorie d'image en une image de la deuxième catégorie d'image, la première catégorie d'image et la deuxième catégorie d'image étant une catégorie à laquelle une caractéristique d'image d'une image appartient, où la caractéristique d'image comprend au moins l'un des éléments suivants : une caractéristique de couleur, une caractéristique de style et une caractéristique de contenu ;
le modèle de conversion d'image de première étape étant formé par une méthode d'apprentissage antagoniste, comprenant la détermination d'un premier échantillon appartenant à la première catégorie d'image et d'un deuxième échantillon appartenant à la deuxième catégorie d'image, et en utilisant

$$G_1, F_1 = \arg\min_{G_1, F_1}(\max_{D_{x1}, D_{y1}}(L_{adv1} + \lambda_1 L_{cyc1}))$$

où $\lambda_1$ est un poids de contrainte de cohérence de cycle ;
$G_1$ est le modèle de conversion d'image de première étape ;
$F_1$ est un modèle de conversion inverse d'image de première étape ;
$D_{x1}$ est un modèle de discrimination de conversion inverse d'image de première étape ;
$D_{y1}$ est un modèle de discrimination de conversion d'image de première étape ;
$L_{adv1}$ est une contrainte d'apprentissage antagoniste exprimée comme :

$$L_{adv1} = \log(D_{y1}(y')) + \log(1 - D_{y1}(G_1(x'))) + \log(D_{x1}(x')) + \log(1 - D_{x1}(F_1(y')))$$

et $L_{cyc1}$ est une contrainte de cohérence de cycle exprimée comme :

$$L_{cyc1} = \left\| F_1(G_1(x')) - x' \right\|_1 + \left\| G_1(F_1(y')) - y' \right\|_1,$$

où $F_1(G_1(x'))$ est l'image de récupération de première étape de premier échantillon, x' est le premier échantillon, $G_1(F_1(y'))$ est l'image de récupération de première étape de deuxième échantillon et y' est le deuxième échantillon ;

où le modèle de conversion d'image de deuxième étape est un modèle de réseau neuronal convolutif utilisé pour convertir davantage l'image sortie par le modèle de conversion d'image de première étape ;

le modèle de conversion d'image de deuxième étape étant formé, après que le modèle de conversion d'image de première étape a été formé, en utilisant

$$G_2, F_2 = \arg\min_{G_2, F_2} (\max_{D_{x2}, D_{y2}} (L_{adv2} + \lambda_2 L_{cyc2})),$$

où

où $\lambda_2$ est un poids de contrainte de cohérence de cycle ;
$G_2$ est le modèle de conversion d'image de deuxième étape ;
$F_2$ est un modèle de conversion inverse d'image de deuxième étape,
$D_{x2}$ est un modèle de discrimination de conversion inverse d'image de deuxième étape,
$D_{y2}$ est un modèle de discrimination de conversion d'image de deuxième étape ;
$L_{adv2}$ est une contrainte d'apprentissage antagoniste, exprimée comme

$$L_{adv2} = \log(D_{y2}(y')) + \log(1 - D_{y2}(\hat{y})) + \log(D_{x2}(x')) + \log(1 - D_{x2}(\hat{x}))$$

et $L_{cyc2}$ est une contrainte de cohérence de cycle de deuxième étape exprimée comme

$$L_{cyc2} = \left\| F_f(\hat{y}, F_1(\hat{y}), F_2(F_1(\hat{y}))) - x' \right\|_1 + \left\| G_f(\hat{x}, G_1(\hat{x}), G_2(G_1(\hat{x}))) - y' \right\|_1$$

où $F_f$ est un modèle de prédiction de poids de deuxième étape et $G_f$ est un modèle de prédiction de poids de première étape ;
$\hat{x} = F_f(y', x_1, x_2)$ est une image de conversion de deuxième échantillon correspondant au deuxième échantillon, $x_1 = F_1(y')$ est une image de conversion de première étape de deuxième échantillon, $x_2 = F_2(x_1)$ est une image de conversion de deuxième étape de deuxième échantillon
$\hat{y} = G_f(x', y_1, y_2)$ est une image de conversion de premier échantillon correspondant au premier échantillon et appartenant à la deuxième catégorie d'image ;
où la fusion de la première image intermédiaire et de la deuxième image intermédiaire selon la première matrice de poids et la deuxième matrice de poids est effectuée en entrant l'image de premier échantillon x', la première image intermédiaire $y_1$ et la deuxième image intermédiaire $y_2$ dans le modèle de prédiction de poids de première étape $G_f$ pour obtenir la deuxième matrice de poids $\alpha_{x'}$ sortie par $G_f$, puis obtenir la première matrice de poids comme $(1-\alpha_{x'})$, où l'image de conversion de premier échantillon est obtenue comme résultat de la fusion de la première image intermédiaire et de la deuxième image intermédiaire, comme

$$\hat{y} = G_f(x', y_1, y_2) = \alpha_{x'} \odot y_2 + (1 - \alpha_{x'}) \odot y_1.$$

2. La méthode de traitement d'image selon la revendication 1, où
l'entrée de l'image à traiter dans le modèle de conversion d'image de première étape, pour déterminer la première image intermédiaire comprend :

effectuer un sous-échantillonnage sur l'image à traiter, pour déterminer une image compressée avec une taille d'image réduite ; et

entrer l'image compressée dans le modèle de conversion d'image de première étape, pour sortir la première image intermédiaire avec une taille d'image qui est la même que la taille d'image de l'image compressée ; et la conversion de la première image intermédiaire en une deuxième image intermédiaire à travers un modèle de conversion d'image de deuxième étape comprend :

effectuer un suréchantillonnage sur la première image intermédiaire, pour déterminer une première image intermédiaire agrandie avec une taille d'image qui est la même qu'une taille d'image de l'image à traiter ; et entrer la première image intermédiaire agrandie dans le modèle de conversion d'image de deuxième étape, pour sortir la deuxième image intermédiaire avec une taille d'image qui est la même que la taille d'image de la première image intermédiaire agrandie.

3. Un dispositif informatique, comprenant une mémoire et un processeur, où la mémoire stocke une instruction lisible par ordinateur, et l'instruction lisible par ordinateur, lorsqu'elle est exécutée par le processeur, amène le processeur à effectuer des opérations de la méthode de traitement d'image selon l'une quelconque des revendications 1 à 2.

4. Un support de stockage non-volatile stockant une instruction lisible par ordinateur, où l'instruction lisible par ordinateur, lorsqu'elle est exécutée par un ou plusieurs processeurs, amène le ou les processeurs à effectuer des opérations de la méthode de traitement d'image selon l'une quelconque des revendications 1 à 2.

~ S102

Obtain a to-be-processed image belonging to a first image category

↓ ~ S104

Input the to-be-processed image into a first stage image conversion model, to obtain a first intermediate image

↓ ~ S106

Convert the first intermediate image into a second intermediate image through a second stage image conversion model

↓ ~ S108

Determine a second weight matrix corresponding to the second intermediate image

↓ ~ S110

Determine a first weight matrix corresponding to the first intermediate image

↓ ~ S112

Fuse the first intermediate image and the second intermediate image according to the first weight matrix and the second weight matrix, to obtain a target image corresponding to the to-be-processed image and belonging to a second image category

## FIG. 1

FIG. 2

FIG. 3

FIG. 4

FIG. 5

FIG. 6

FIG. 7

Image processing apparatus 700

706
First stage model training module

707
Second stage model training module

701
Obtaining module

702
First stage conversion module

703
Second stage conversion module

704
Determining module

705
Fusion module

FIG. 8

FIG. 9

FIG. 10

**REFERENCES CITED IN THE DESCRIPTION**

**Patent documents cited in the description**

- CN 2018100785448

**Non-patent literature cited in the description**

- Representation Learning by Rotating Your Faces. **LUAN TRAN et al.** ARXIV.ORG. CORNELL UNIVERSITY LIBRARY, 31 May 2017